**Europäisches Patentamt**

**European Patent Office**

**Office européen des brevets**

(19)

(11) Veröffentlichungsnummer: **0 233 360 B1**

# (12) EUROPÄISCHE PATENTSCHRIFT

(45) Veröffentlichungstag der Patentschrift: **17.04.91**

(51) Int. Cl.⁵: $\text{B60T}$ **8/00**

(21) Anmeldenummer: **86117677.4**

(22) Anmeldetag: **18.12.86**

(54) **Regeleinrichtung.**

(30) Priorität: **07.02.86 DE 3603810**

(43) Veröffentlichungstag der Anmeldung:
**26.08.87 Patentblatt 87/35**

(45) Bekanntmachung des Hinweises auf die
Patenterteilung:
**17.04.91 Patentblatt 91/16**

(84) Benannte Vertragsstaaten:
**DE FR GB SE**

(56) Entgegenhaltungen:
**DD-A- 221 859**
**DE-A- 3 316 208**
**DE-A- 3 413 758**

**ELEKTRONIK, Band 30, Nr. 1, Januar 1981,
Seiten 73-76, München; H. GUTGESELL
"Integrierte Druckwandler in der Anwendung"**

**"Grundlagen der selbsttätigen Regelung",
Prof. Dr. O. Schäfer, 3. Auflage, 1961, Franzis
Verlag, München, S. 4-7 und 19-23**

(73) Patentinhaber: **ROBERT BOSCH GMBH
Postfach 50
W-7000 Stuttgart 1(DE)**

(72) Erfinder: **Janetzke, Helmut, Dipl.-Ing.
Liegnitzerstrasse 4
W-7141 Schwieberdingen(DE)**
Erfinder: **Schulz, Alfred, Dipl.-Ing.
Leinfelderweg 7
W-7141 Oberriexingen(DE)**
Erfinder: **Volkert, Matthias, Dipl.-Ing.
Friedrichstrasse 20
W-7143 Vaihingen/Enz(DE)**

## Beschreibung

Stand der Technik

Die Erfindung geht aus von einer Regeleinrichtung der im Oberbegriff des Anspruchs 1 definierten Gattung. (siehe "Grund lagen der selbsttätigen Regellung " Prof. Dr Otto soläfter, 3. Auflage, 1961, Franzis Verlang München, s, 4 bis 7 und 19 bis 23).

Solche Regeleinrichtungen dienen zur kontinuirlichen Anpassung einer Regelgröße an eine vorgegebene Führungsgröße, wobei die Anpassung in kürzester Regelzeit agestrebt wird. Solche Regeleinrichtungen sind relativ einfach zu realisieren, wenn das Stellglied eine lineare Kennlinie aufweist. Dann können einfache und wenig störanfällige Regler mit P-, PI- oder PID-Verhalten eingesetzt werden.

Bei Bremsanlagen für Kraftfahrzeuge weisen die üblicherweise verwendeten Drucksteuerventile, die mitunter als Proportional-Magnetventile ausgebildet sind, keine lineare Stellkennlinie auf. Vielmehr ist die stromproportionale Stellkennlinie mit einer starken Hysterese behaftet. Um dennoch eine möglichst einfache und wenig störanfällige Bremsdruckregelung zu erzielen, verwendet man bei sog. ABS-Systemem als Sellglieder 3/3-wege-Magnetventile, die von einer Regelelektronik aus einer Druckhalte-Stellung in eine Druckaufbau- und eine Druckabbau-Stellung umgeschaltet werden. Die Regelelektronik generiert in Abhängigkeit von Bremsparametern, wie dem vom Bremsedal eingesteuerten Bremsdruck, der Raddrehzahl und ggf. der Achslast, einen Solldruckwert für den erforderlichen Bremsdruck. Drucksensoren erfassen den in die einzelnen Radbremszylinder eingesteuerten Bremsdruck und melden diesen als elektrischen Istdruckwert an die Regelelektronik. Je nach Vorzeichen der Regelabweichung werden die 3/3-Wege-Magnetventile in die Druckaufbau- oder Druckabbau-Stellung umgeschaltet, und zwar solange, bis die Regelabweichung etwa Null ist. Dann fällt die Ansteuerung der Magnetventile weg und diese verbleiben in ihrer Druckhalte-Stellung.

In der DE 3 316 208 A3 ist ein Magnetventil mit Erregerstrom-Steuervorrichtung für eine Fahrzeugbremsanlage beschrleben, das eine hyteresebehaftete Stellkennlinie, eine sog. ventilhysterese, aufweist, d.h. der Steuerstrom für die Magneterregung des Ventils muß um einen konstruktiv bedingten Betrag erhöht bzw. erniedrigt werden, bevor eine Änderung des Ausgangsdrucks am Ventil einsetzt. Um diese Hysterese zu kompensieren, ist eine Kompensationsschaltung vorgesehen, die ein der Erregerstrom-Steuervorrichtung nachgeschaltetes Korrekturglied und einen Monotoniedetektor umfaßt. Letzterer aktiviert in Abhängigkeit vom Anstieg bzw. Abfall des zeitlichen Verlaufs des Ausgangsdrucks des Magnetventils das Korrekturglied, das seinerseits eine Sprungänderung des von der Erregerstrom-Steuervorrichtung eingestellten Erregerstroms um einen die Hysterese kompensierenden Betrag durchführt.

Vorteile der Erfindung

Die erfindungsgemäße Regeleinrichtung mit den kennzeichnenden Merkmalen des Anspruchs 1 hat den Vorteil, daß durch die erfindungsgemäBe Bestimmung des Steuerstroms für das Stellgleid die Hysterese der stromproportionalen stellkennlinie komponsiert und damit das Stellglied linearisiert wird. Durch das nunmehr lineare Stellglied ist die Verwendung eines einfachen p-,PI- oder PID-Reglers möglich.

Bei der Verwendung der Regeleinrichtung in einer Bremsanlage für Kraftfahrzeuge wird damit der Einsatz von Proportional-Magnetventilen möglich, was wiederum die Voraussetzung für ein kontinuierlich arbeitendes ABS-System schafft. ABS-Systeme mit kontinuierlich eingesteuerstem Bremsdruck sind den bisher bekannten ABS-Systemen mit schaltenden Magnetventilen in Hinblick auf kürzere Regelzeiten und größere Regelgenauigkeit überlegen.

Als Stellglieder können einfachst aufgebaute und robuste sog. ALB-Proportionalventile verwendet werden, wie sie aus Bremsanlagen mit achslastabhängiger Bremsdruckregelung bekannt sind. Die Einführung der Haltegeraden bringt dabei den Vorteil eines minimalen Verbrauchs an Steuermedium, z.B. Druckluft, da für den Fall des Druckhaltens ein Ventilsteuerstrom eingestellt wird, der die Dichtigkeit beider Ventilsitze des ALB-Proportionalventils gewährleistet.

Die Regelgenauigkeit der erfindungsgemäßen Regeleinrichtung beträgt bei Einsatz von 12 Bit-Wandlern 30 mbar und bei Einsatz von 8 Bit-Wandlern 80 mbar. Auf diese Regelgenauigkeit, d.h. Regelhysterese oder Unempfindlichkeitszone des Reglers, wird der Vorgabewert zur Auswahl der Haltegeraden oder der Regressionsgeraden eingestellt. Als Meßwandler oder Meßaufnehmer werden lediglich einfache Drucksensoren benötigt, die entweder im Stellglied selbst, z.B. im Relaisventil des ALB-Proportionalventils, oder an beliebiger Stelle hinter dem Stellglied im Radbremszylinder oder in der zu diesem führenden Bremsleitung angebracht werden können.

Durch die in den weiteren Ansprüchen aufgeführten Maßnahmen sind vorteilhafte Weiterbildungen und Verbesserungen der im Anspruch 1 angegebenen Bremsanlage möglich.

Eine vorteilhafte Ausführungsform der Erfindung ergibt sich dabei aus Anspruch 4.

Durch diese Maßnahmen können die Regressionsgeraden in einer einmaligen Initialisierungsphase vom Rechner selbst aufgenommen werden. Darüber hinaus kann von Zeit zu Zeit die Aufnahme der Regressionsgeraden erneut durchgeführt werden, um so der Alterung des Stellgliedes Rechnung zu tragen und durch Alterung bedingte Regelungenauigkeit der Regeleinrichtung zu eliminieren.

Eine vorteilhafte Ausführungsform der Erfindung ergibt sich auch aus Anspruch 5. Durch das Tiefpaßfilter wird erreicht, daß auch bei sprunghaften Sollwertänderungen kein oder ein nur geringes Überschwingen auftritt. Die Schnelligkeit der Regelung bleibt dennoch annähernd erhalten.

Eine vorteilhafte Ausführungsform der Erfindung ergibt sich auch aus Anspruch 11. Durch diese Maßnahme ergeben sich nur minimale Verlustleistungen bei mit einem linearen Stromregler gleichwertigem Regelverhalten. Die Schaltfrequenz des Stromreglers liegt in der Größenordnung von 1 kHz. Bei Verwendung eines Proportional-Magnetventils als Stellglied kann die Magneterregerspule des Magnetventils als energiespeicherndes Bauteil herangezogen werden.

## Zeichnung

Die Erfindung ist anhand eines in der Zeichnung dargestellten Ausführungsbeispiels in der nachfolgenden Beschreibung näher erläutert. Es zeigen:

Fig. 1 ein Blockschalt einer Regeleinrichtung in einer pneumatischen Bremsanlage eines Kraftfahrzeugs,

Fig. 2 ein Diagramm der Stellkennlinie eines Stellgliedes in der Regeleinrichtung in Fig. 1,

Fig. 3 ein Schaltbild des Stellgliedes in der Regeleinrichtung in Fig. 1,

Fig. 4 ein Schaltbild eines Stromreglers in der Regeleinrichtung gemäß Fig. 1.

## Beschreibung des Ausführungsbeispiels

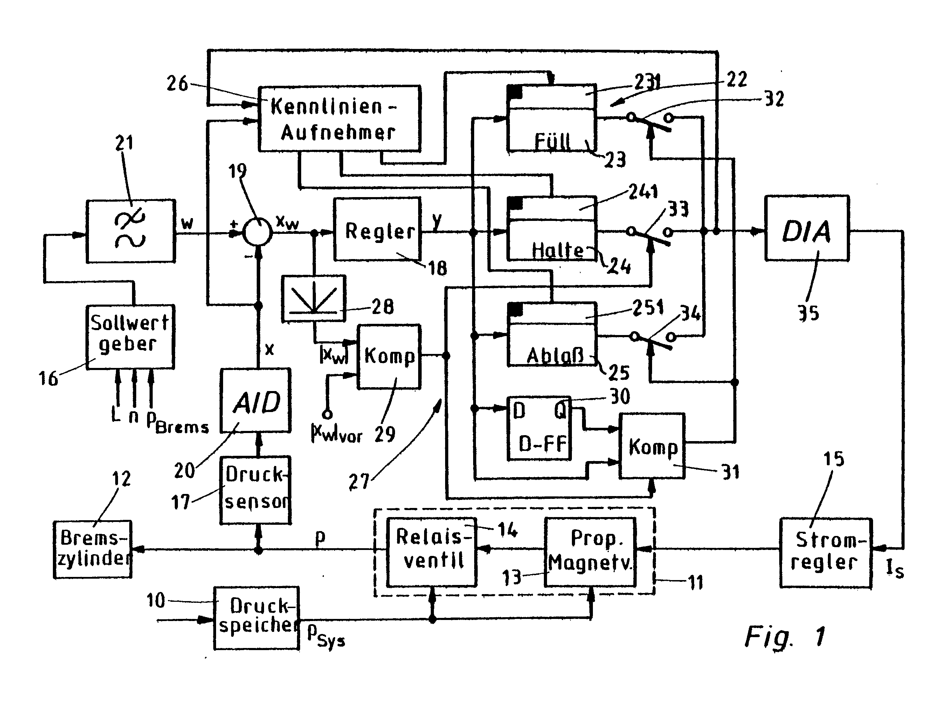

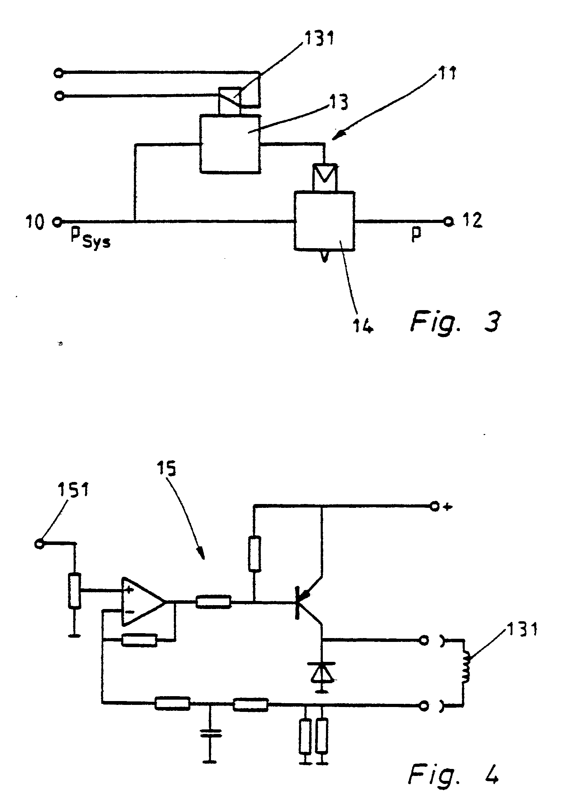

Von der in Verbindung mit der Regeleinrichtung in Fig. 1 ausschnittweise dargestellten pneumatischen Bremsanlage eines Kraftfahrzeugs ist mit 10 der Druckspeicher, mit 11 ein ALB-Proportionalventil und mit 12 ein Bremszylinder bezeichnet. Der Druckspeicher 10 wird in bekannter Weise über ein Vierkreis-Schutzventil von einem Kompressor mit Druckluft auf Betriebsdruck $p_{sys}$ aufgeladen. Das ALB-Proportionalventil 11 liegt eingangsseitig an dem Ausgang des Druckspeichers I0 und ist ausgangsseitig mit dem Bremszylinder 12 verbunden. Das ALB-Proportionalventil 11 besteht aus einem Proportional-Magnetventil 13 und einem druckgesteuerten Relaisventil 14. Das Schaltbild des ALB-Proportionalventils 11 ist in Fig. 3 dargestellt. Der Einlaß des Magnetventils 13 und der Einlaß des Relaisventils 14 sind mit dem Druckspeicher 10 verbunden und dadurch mit Betriebs- oder Systemdruck $p_{sys}$ der Bremsanlage beaufschlagt. Der Auslaß des Magnetventils 13 ist mit dem Steuereingang des Relaisventils 14 und der Auslaß des Relaisventils 14 mit dem Eingang des Bremszylinders 12 verbunden. Die Magneterregerspule 131 des Relaisventils 11 ist mit einem Stromregler 15 verbunden, der im Detail in Fig. 4 dargestellt ist. Der Eingang 151 des Stromreglers 15 ist mit der Regeleinrichtung verbunden, die den Sollstrom für den Stromregler 15 vorgibt. Das ALB-Proportionalventil 11 bildet das Stellglied der Regeleinrichtung.

Die Regeleinrichtung weist ferner einen Sollwertgeber 16, einen als Drucksensor ausgebildeten Meßwandler 17 und einen Regler 18 auf. Der Sollwertgeber 17 gibt die sog. Führungsgröße w vor, also den Sollwert der Regelgröße, während der Meßwandler 17 den Istwert der Regelgröße x an die Regeleinrichtung liefert. Ein Differenzbildner 19 bildet aus Führungsgröße w und Istwert der Regelgröße x die Regelabweichung $x_w$, die dem Regler 18 zugeführt wird, an dessen Ausgang die Stellgröße y abnehmbar ist. Bei dem vorliegenden Einsatz der Regeleinrichtung in einer pneumatischen Bremsanlage ist die Regelgröße der Bremsdruck p, der von dem ALB-Proportionalventil 11 in dem Bremszylinder 12 eingesteuert wird und dessen Istwert von dem Drucksensor 17 erfaßt und in ein elektrisches Meßsignal umgewandelt wird. Da im allgemeinen der Drucksensor 17 ein analoges elektrisches Meßsignal ausgibt, ist zwischen dem Drucksensor 17 und dem Differenzbildner 19 ein Analog-Digital-Wandler (A/D-Wandler) 20 eingeschaltet.

Der Sollwertgeber 16 generiert aus ihm zugeführten Bremsparametern, wie dem vom Bremspedal der Betriebsbremse eingesteuerten Bremsdruck $p_{Brems}$, der Raddrehzahl n und ggf. der Achslast L, einen Sollwert des in den Bremszylinder einzusteuernden Bremsdruckes p, der nach Tiefpaßfilterung in einem dem Sollwertgeber 16 nachgeschalteten Tiefpaß 21 als Führungsgröße w am Differenzbildner 19 anliegt.

Die vom Differenzbildner 19 durch Subtraktion gebildete Regelabweichung $x_w$ wird dem Regler 18 zugeführt, der als einfacher P-, PI,- oder PID-Regler ausgebildet sein kann.

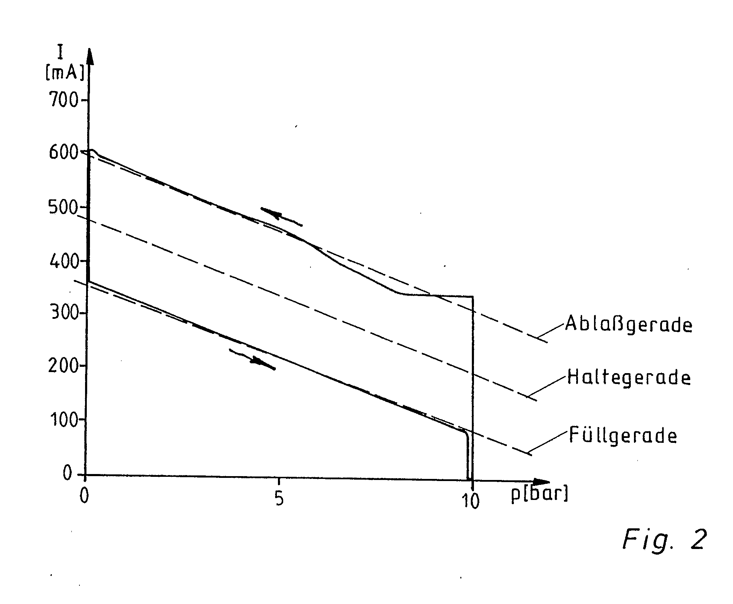

Das das stromgesteuerte Stellglied der Regeleinrichtung bildende ALB-Proportionalventil 11 weist eine stromproportionale Stellkennlinie mit einer Hysteres auf. Die Stellkennlinie ist in Fig. 2 dargestellt. Sie hat eine fallende Charakteristik, d.h. zur Aussteuerung eines kleinen Druckes p ist ein großer Steuerstrom I und umgekehrt erforderlich. Die Stellkennlinie wird bei Anlegen eines Steuerstroms I in Pfeilrichtung durchlaufen. Beim Übergang von Druckaufbau zu Druckabbau und umgekehrt im Bremszylinder tritt ein Steuerstrom-Sprung von ca. 300 mA auf. Ein Proportional-Magnetventil mit einer solchen Stellkennlinie ist in Verbindung mit einem Relaisventil aus der DE-OS 34 13 758 bekannt und dort in seinem Aufbau und in seiner Wirkungsweise beschrieben.

Um die Hysterese in der Stellkennlinie des ALB-Ventils 11 zu kompensieren und damit das Stellglied zu linearisieren, ist dem Regler 18 ein Rechner 22 nachgeschaltet. Der Rechner 22 weist drei Recheneinheiten 23 - 25 mit jeweils einem zugeordneten Speicherbereich 231, 241, 251 auf. In jedem digitalen Speicherbereich 231, 241, 251 sind die Parameter einer Kennlinie des Stellgliedes bzw. ALB-Proportionalventils 11 in Form von digitalen Werten abgespeichert. Dabei sind in dem Speicherbereich 231 und in dem Speicherbereich 251 jeweils ein Parameterpaar $a_F$, $b_F$ bzw. $a_A$, $b_A$ von zwei Regressionsgeraden abgespeichert, die jeweils einem der beiden Hystereseäste der Stellkennlinie des Stellgliedes in Fig. 2 angenähert sind. $a_F$, $b_F$ bilden dabei das Parameterpaar für eine sog. Füllgerade und $a_A$, $b_A$ das Parameterpaar für eine sog. Ablaßgerade. Im Speicherbereich 241 ist das Parameterpaar $a_H$, $b_H$ für eine Haltegerade abgespeichert, die sich aus dem Verlauf der Mittelwerte beider Regressionsgeraden ergibt. In der Stellkennlinie des Stellgliedes 11 in Fig.2 sind die Regressionsgeraden, also die Füllgerade und die Ablaßgerade und die sich daraus als Mittelwert ergebende Haltegerade strichliniert eingezeichnet.

Zur selbsttätigen Aufnahme und Abspeicherung der Parameter dieser drei Kennlinien in den Speicherbereichen 231, 241, 251 der Recheneinheiten 23 - 25 ist ein Kennlinienaufnehmer 26 vorgesehen, der während einer Initialisierungsphase, in welcher die Hysteresekurve des Stellgliedes 11 mit mittlerer Geschwindigkeit durchfahren wird, die Meßwertpaarungen Bremsdruck p und Erregerstrom I erfaßt und mittels linearer Regression die Parameter der Füllgeraden und der Ablaßgeraden berechnet. Diese Parameter werden paarweise in den Speicherbereichen 231 und 251 abgelegt. Aus diesen Parametern werden die Parameter für die Haltegerade berechnet und in dem Speicherbereich 241 abgelegt. Bei Anlegen der Stellgröße y an den Rechner 22 berechnen die Recheneinheiten 23 - 25 den für das Stellglied 11 erforderlichen Steuerstrom, also den Sollstrom $I_S$, für den Stromregler 15 nach folgenden Gleichungen:

$$I_S = a_F y + b_F \qquad ; \qquad I_S = a_H y + b_H \qquad ; \qquad I_S = a_A y + b_A .$$

$$\text{Füllgerade} \qquad\qquad \text{Haltegerade} \qquad\qquad \text{Ablaßgerade}$$

Je nachdem, ob dabei die Stellgröße y bestimmte Kriterien erfüllt, z.B. ab- oder zunimmt oder unter einem Vorgabewert liegt, wird der mittels der Ablaß- oder Füllgeraden oder Haltegeraden berechnete Sollstrom $I_S$ an den Stromregler 15 gegeben. Hierzu ist eine Auswahlvorrichtung 27 vorgesehen, die abhängig von dem Betrag der Regelabweichung $|x_w|$ und von der Zu- oder Abnahme der Stellgröße y eine der Recheneinheiten 23 - 25 auf den Stromregler 15 aufschaltet. Die Auswahlvorrichtung 27 weist hierzu einen an dem Eingang des Reglers 18 bzw. an dem Ausgang des Differenzbildners 19 angeschlossenen Betragsbildner 28, einen ersten Komparator 29, der mit einem der Reglerhysterese, d.h. der Unempfindlichkeitszone der Regeleinrichtung,entsprechenden Vorgabewert $|x_w|_{vor}$ belegt ist, ein als D-Flip-Flop ausgebildetes Speicherglied 30, einen zweiten Komparator 31 und drei Auswahlschalter 32 - 34 auf, die jeweils den Ausgang der Recheneinheiten 23 - 25 über einen Digital-Analog-Wandler (D/A-Wandler) 35 mit dem Eingang 151 des Stromreglers 15 verbinden. Der erste Komparator 29 ist mit seinem Eingang an den Ausgang des Betragsbildners 28 angeschlossen. Sein Ausgangssignal steuert zum einen den Auswahlschalter 33 und aktiviert zum anderen den zweiten Komparator 31. Das Umsteuern des Auswahlschalters 33 in seine Schließstellung und das Aktivieren des Komparators 31 kann nur wechselweise erfolgen. Der D-Eingang des Speichergliedes 30 ist ebenso wie die Eingänge der Recheneinheiten 23 - 25 mit dem Ausgang des Reglers 18 verbunden. Der eine Eingang des zweiten Komparators 31 ist ebenfalls an dem Ausgang des Reglers 18 angeschlossen, während der andere Eingang mit dem Q-Ausgang des Speichergliedes 30 verbunden ist. Der Ausgang des Komparators 31 ist sowohl mit dem Auswahlschalter 32 als auch mit dem Auswahlschalter 34 verbunden, die wechselweise geschaltet werden.

Der Komparator 29 prüft, ob der am Ausgang des Betragsbildners 28 anstehende Betrag der Regelabweichung $|x_w|$ größer oder kleiner als der Vorgabewert, also die Regelhysterese, ist. Ist der Betrag der Regelabweichung $|x_w|$ kleiner als der Vorgabewert, so wird der Auswahlschalter 33 geschlossen und damit die Recheneinheit 24 zum Auslesen freigegeben. Mit der an dem Eingang der Recheneinheit 24 anliegenden Stellgröße y wird mittels der Haltegeraden der Sollstrom $I_S$ für den Stromregler 15 bestimmt.

Ist der Betrag der Regelabweichung $|x_w|$ größer als der Vorgabewert, so wird von dem Ausgangssignal des ersten Komparators 29 der zweite Komparator 31 aktiviert. Dieser vergleicht den Momentanwert $y_k$ der anliegenden Stellgröße mit dem vorhergehenden Momentanwert $y_{k-1}$ der Stellgröße y, der in dem Speicherglied 30 gespeichert ist. Ist der Momentanwert $y_k$ der Stellgröße y größer als der vorhergehende Wert $y_{k-1}$, was charakteristisch für einen Füllvorgang ist, so wird der Auswahlschalter 32 angesteuert. Dieser schließt, und mit der an dem Eingang der Recheneinheit 23 anliegenden Stellgröße y wird mittels der Füllgeraden der Sollstrom $I_S$ für den Stromregler 15 bestimmt. Ist der Momentanwert $y_k$ der Stellgröße y kleiner als der vorhergehende Wert $y_{k-1}$, was charakteristisch für einen Druckablaßvorgang ist, so wird der Auswahlschalter 34 geschlossen, und die Bestimmung des Sollstromes $I_S$ für den Stromregler 15 aufgrund der am Reglerausgang anstehenden Stellgröße y erfolgt mittels der Ablaßgeraden. Zusammenfassend wählt also der erste Komparator 29 je nach Größe des Betrages der Regelabweichung $|x_w|$ die Haltegerade oder eine der beiden Regressionsgeraden zur Bestimmung des Sollstromes $I_S$ des Stromreglers bei gegebener Stellgröße am Ausgang des Reglers 18 aus. Der zweite Komparator 31 trifft die Auswahl zwischen den beiden Regressionsgeraden aufgrund des Vorzeichens der Stellgrößenänderung. Bei Zunahme der Stellgröße y wird der Sollstrom $I_S$ mittels der Füllgeraden und bei Abnahme der Stellgröße y mittels der Ablaßgeraden ermittelt. Der in Fig. 4 im Schaltbild dargestellte geschaltete Stromregler 15 ist an sich bekannt, so daß hier bezüglich seines Aufbaus ausschließlich auf Fig. 4 verwiesen wird. Die Schaltfrequenz des Stromreglers 15 liegt bei ungefähr 1 kHz. Eine höhere Schaltfrequenz ist nicht notwendig, da die mechanischen Komponenten des Proportional-Magnetventils 13 relativ träge sind und die verbleibende Regelbewegung zusätzlich glätten.

Die Erfindung ist nicht auf das vorstehend beschriebene Ausführungsbeispiel beschränkt. So ist die Unterteilung des Rechners 22 in drei Recheneinheiten 23, 24, 25 nicht erforderlich. Es ist auch möglich, daß der Rechner 22 die Geradengleichung für alle drei Geraden berechnet und die Auswahlvorrichtung 27 das jeweils momentan erforderliche Parameterpaar $a_F$, $b_F$ bzw. $a_A$, $b_A$ bzw. $a_H$, $b_H$ nach den beschriebenen Kriterien zum Abruf durch den Rechner 22 aus den Speicherbereichen 231, 241, 251 freigibt.

Des weiteren ist es auch möglich, nicht nur die Parameter der Geraden abzuspeichern und entsprechende Geradenpunkte mit den Parametern durch den Rechner 22 bestimmen zu lassen, sondern auch die Geraden in Form von digitalen Stützwerten komplett abzuspeichern, so daß der Rechner 22 zu der anliegenden Steuergröße y nur noch den entsprechenden Steuerstrom $I_S$ auszulesen braucht und ggf. noch zu interpolieren hat. Die Abspeicherung der Parameter ist jedoch wesentlich speicherplatzsparender.

## Ansprüche

1. Regeleinrichtung mit einem Sollwertgeber zur Vorgabe eines Sollwertes der Regelgröße (Führungsgröße w), mit einem Meßwandler zur Erfassung des Istwertes der Regelgröße x, mit einem Regler zur Generierung einer von der Regelabweichung $x_w$ abhängigen Stellgröße y und mit einem Stellglied zur stellgrößenabhängigen Beeinflussung der Regelgröße x, **dadurch gekennzeichnet**, daß das Stellglied (11) eine hysteresebehaftete Stellkennlinie mit einer im wesentlichen proportionalen Abhängigkeit der Regelgröße (x) von einer Steuergröße ($I_S$) aufweist, daß dem Regler (18) ein Rechner (22) nachgeschaltet ist, daß der Rechner (22) zwei Regressionsgeraden und eine Haltegerade generiert, wobei die Regessionsgeraden jeweils einem der Hystereseäste der Stellkennlinie angenähert sind und die Haltegerade dem Verlauf des Mittelwertes beider Regressionsgeraden entspricht, und daß der Rechner (22) die für eine am Ausgang des Reglers (18) anliegende Stellgröße (y) erforderliche Steuergröße ($I_S$) des Stellgliedes (11) aus einer der drei Geraden derart bestimmt, daß bei einem Betrag der Regelabweichung ( $|x_w|$) kleiner als ein Vorgabewert ($|x_w|_{vor}$) die Haltegerade und bei einem Betrag der Regelabweichung ($|x_w|$) größer als der Vorgabewert ($|x_w|_{vor}$) eine der beiden Regressionsgeraden herangezogen und die Auswahl der jeweiligen Regressionsgerade durch das Vorzeichen der Stellgrößenänderung getroffen wird.

2. Regeleinrichtung nach Anspruch 1, **dadurch gekennzeichnet**, daß das Stellglied (11) derart ausgebildet ist, daß zur Aussteuerung einer kleinen Regelgröße (x) eine große Steuergröße ($I_S$) und umgekehrt erforderlich ist, daß die eine Regressionsgerade als Ablaßgerade dem ansteigenden und die andere Regressionsgerade als Füllgerade dem abfallenden Hystereseast der Stellkennlinie angenähert ist und daß die Auswahl der Regressionsgeraden bei der Steuergrößenbestimmung derart getroffen ist, daß bei Abnahme der Stellgröße (y) die Ablaßgerade und bei Zunahme der Stellgröße (y) die Füllgerade herangezogen wird.

3. Regeleinrichtung nach Anspruch 1 oder 2, **dadurch gekennzeichnet**, daß der Rechner (22) mindestens einen Speicherbereich (231, 241, 251) aufweist, in welchem Parameterpaare ($a_F$, $b_F$; $a_A$, $b_A$; $a_H$, $b_H$) der Regressionsgeraden und der Haltegeraden abgespeichert sind, und daß der Rechner (22) mit den abgespeicherten Parameterpaaren ($a_F$, $b_F$; $a_A$, $b_A$; $a_H$, $b_H$) jeweils für eine anliegende Stellgröße (y) die Steuergröße ($I_S$) nch einer Geradengleichung berechnet.

4. Regeleinrichtung nach Anspruch 3, **dadurch gekennzeichnet**, daß der Rechner (22) eine Vorrichtung (26) zur automatischen Aufnahme und Abspeicherung der Parameterpaare ($a_F$, $b_F$; $a_A$, $b_A$; $a_H$, $b_H$) der Regressionsgeraden und der Haltegeraden aufweist.

5. Regeleinrichtung nach einem der Ansprüche 1 - 4, **dadurch gekennzeichnet**, daß dem Regler (18) ein die Regelabweichung ($x_w$) bildender Subtrahierer (19) vorgeschaltet ist, dem einerseits das Ausgangssignal des Meßwandlers (17) und andererseits über ein Tiefpaßfilter (21) das Ausgangssignal des Sollwertgebers (16) zugeführt ist.

6. Regeleinrichtung nach einem der Ansprüche 1 - 5, **dadurch gekennzeichnet**, daß eine Auswahlvorrichtung (27) vorgesehen ist, die abhängig von dem Betrag der Regelabweichung ($|x_w|$) und von der Zu- oder Abnahme der Stellgröße (y) eines der abgespeicherten Parameterpaare ($a_F$, $b_F$; $a_A$, $b_A$; $a_H$, $b_H$) zur Berechnung freigibt.

7. Regeleinrichtung nach Anspruch 6, **dadurch gekennzeichnet**, daß die Auswahlvorrichtung (27) derart ausgebildet ist, daß sie bei einem Betrag der Regelabweichung ($|x_w|$) kleiner als der Vorgabewert ($|w_{vor}|$) das der Haltegeraden zugehörige Parameterpaar ($a_H$, $b_H$) zur Berechnung freigibt und daß sie bei einem Betrag der Regelabweichung ($|x_w|$) größer als der Vorgabewert ($|x_w|_{vor}$) das der Füllgeraden zugehörige Parameterpaar ($a_F$, $b_F$) zur Berechnung freigibt, wenn die momentane Stellgröße ($y_k$) größer als die vorherige Stellgröße ($y_{k-1}$) ist, und das der Ablaßgeraden zugehörige Parameterpaar ($a_A$, $b_A$) zur Berechnung freigibt, wenn die momentane Stellgröße ($y_k$) kleiner als die vorherige Stellgröße ($y_{k-1}$) ist.

8. Regeleinrichtung nach Anspruch 6 oder 7, **dadurch gekennzeichnet**, daß dem Rechner (22) ein Digital-Analog-Wandler (35) nachgeschaltet ist.

9. Regeleinrichtung nach einem der Ansprüche 1 - 8, **gekennzeichnet durch** ihre Anordnung in einer druckmittelbetätigten, vorzugsweise pneumatischen, Bremsanlage eines Kraftfahrzeugs, in welcher der Bremsdruck (p) die Regelgröße (x) bildet.

10. Regeleinrichtung nach Anspruch 9, **dadurch gekennzeichnet**, daß die Steuergröße des Stellgliedes (11) ein Steuerstrom ($I_S$) ist.

11. Regeleinrichtung nach Anspruch 10, **dadurch gekennzeichnet**, daß zwischen dem Digital-Analog-Wandler (35) und dem Stellglied (11) ein geschalteter Stromregler (15) angeordnet ist.

12. Regeleinrichtung nach einem der Ansprüche 9 - 11, **dadurch gekennzeichnet**, daß das Stellglied (11) ein Proportional-Magnetventil (13) und ein druckgesteuertes Relaisventil (14) aufweist, die beide einlaßseitig mit dem Systemdruck ($p_{sys}$) der Bremsanlage beaufschlagt sind, und daß jeweils auslaßseitig das Proportional-Magnetventil (13) mit dem Steuereingang des Relaisventils (14) und das Relaisventil (14) mit einer zu mindest einem Radbremszylinder (12) der Bremsanlage führenden Bremsleitung verbunden ist.

## Claims

1. Regulating device with a desired-value transmitter for presetting a desired value of the regulating variable (command variable w), with a measuring transducer for detecting the actual value of the regulating variable x, with a controller for generating an adjusting variable y dependent on the control

EP 0 233 360 B1

deviation $X_w$, and with an actuator for influencing the regulating variable x as a function of the adjusting variable, characterized in that the actuator (11) has a control characteristic with hysteresis, with an essentially proportional dependence of the regulating variable (x) on a control variable ($I_s$), in that the controller (18) is followed by a computer (22), in that the computer (22) generates two regression straight lines and a holding straight line, the regression straight lines each approximating to one of the hysteresis branches of the control characteristic, and the holding straight line corresponding to the trend of the average value of the two regression straight lines, and in that the computer (22) determines the control variable ($I_s$) of the actuator (11) required for an actuating variable (y) present at the output of the controller (18) from one of the three straight lines, in such a way that, when the sum of the control deviation ($|x_w|$) is smaller than a preset value ($|x_y|_{pre}$), the holding straight line is used and, when the sum of the control deviation ($|X_w|$) is larger than the preset value ($|X_w|_{pre}$), one of the two regression straight lines is used, and the selection of the respective regression straight line is made by means of the sign of the change in the adjusting variable.

2. Regulating device according to Claim 1, characterized in that the actuator (11) is designed in such a way that, to select a low regulating variable (x), a high control variable ($I_s$) is required, and vice versa, in that one regression straight line approximates as a bleeding straight line to the rising hysteresis branch of the control characteristic and the other regression straight line approximates as a filling straight line to the falling hysteresis branch of the control characteristic, and in that, in the determination of the control variable, the selection of the regression straight lines is made in such a way that when there is a decrease of the adjusting variable (y) the bleeding straight line is used and when there is an increase in the adjusting variable (y) the filling straight line is used.

3. Regulating device according to Claim 1 or 2, characterized in that the computer (22) has at least one storage region (231, 241, 251), in which pairs of parameters ($a_F$, $b_F$; $a_A$, $b_A$; $a_H$, $b_H$) of the regression straight lines and of the holding straight line are stored, and in that by means of the stored pairs of parameters ($a_F$, $b_F$ ; $a_A$, $b_A$; $a_H$, $b_H$) the computer (22) calculates the control variable ($I_s$) for a present adjusting variable (y) according to a linear equation.

4. Regulating device according to Claim 3, characterized in that the computer (22) has a device (26) for the automatic recording and storage of the pairs of parameters ($a_F$, $b_F$; $a_A$, $b_A$; $a_H$, $b_H$) of the regression straight lines and of the holding straight line.

5. Regulating device according to one of Claims 1 - 4, characterized in that the controller (18) is preceded by a subtractor (19) which forms the control deviation ($X_w$) and to which on the one hand the output signal of the measuring transducer (17) and on the other hand, via a low-pass filter (21), the output signal of the desired-value transmitter (16) are fed.

6. Regulating device according to one of Claims 1-5, characterized in that there is a selector device (27) which releases one of the stored pairs of parameters ($a_F$, $b_F$; $a_A$, $b_A$; $a_H$, $b_H$) for calculation as a function of the sum of the control deviation ($|x_w|$) and of the increase or decrease of the adjusting variable (y).

7. Regulating device according to Claim 6, characterized in that the selector device (27) is designed in such a way that, when the sum of the control deviation ($|x_w|$) is smaller than the preset value ($|x_w|_{pre}$), it releases for calculation the pair of parameters ($a_H$, $b_H$) associated with the holding straight line, and in that, when the sum of the control deviation ($|x_w|$) is larger than the preset value ($|X_w|_{pre}$), it releases for calculation the pair of parameters ($a_F$, $b_F$) associated with the filling straight line, when the instantaneous adjusting variable ($y_k$) is higher than the previous adjusting variable ($y_{k-1}$), and releases for calculation the pair of parameters ($a_A$, $b_A$) associated with the bleeding straight line, when the instantaneous adjusting variable ($y_k$) is lower than the previous adjusting variable ($y_{k-1}$).

8. Regulating device according to Claim 6 or 7, characterized in that the computer (22) is followed by a digital/analog converter (35).

9. Regulating device according to one of Claims 1 - 8, characterized by its arrangement in a pressure-medium-actuated, preferably pneumatic brake system of a motor vehicle, in which the brake pressure (p) forms the regulating variable (x).

7

**10.** Regulating device according to Claim 9, characterized in that the control variable of the actuator (11) is a control current ($I_s$).

**11.** Regulating device according to Claim 10, characterized in that a switched current regulator (15) is arranged between the digital/analog converter (35) and the actuator (11).

**12.** Regulating device according to one of Claims 9 - 11, characterized in that the actuator (11) has a proportional solenoid valve (13) and a pressure-controlled relay valve (14) which are both subjected to the system pressure ($P_{sys}$) of the brake system on the inlet side, and in that, each on the outlet side, the proportional solenoid valve (13) is connected to the control inlet of the relay valve (14) is and the relay valve (14) is connected to a brake line leading to at least one wheel-brake cylinder (12) of the brake system.

**Revendications**

**1.** Installation de régulation comportant un générateur de grandeurs de consigne pour predéterminer une grandeur de consigne de la grandeur de réglage (grandeur guide w), un convertisseur de mesure pour capter la valeur réelle de la grandeur de réglage x, un organe de réglage pour générer une grandeur de réglage y en fonction de la déviation de réglage $x_w$ et un organe de réglage pour influencer la grandeur de régulation x en fonction de la grandeur de réglage, installation caractérisée en ce que l'organe de réglage (11) présente une caractéristique de réglage à hystérésis avec une fonction essentiellement proportionnelle liant la grandeur de régulation (x) à une grandeur de commande ($I_s$), l'organe de régulation (18) étant suivi d'un calculateur (22) qui génère deux droites de régression et une droite de maintien, les droites de régression étant respectivement voisines de l'une des branches d'hystérésis de la caractéristique de réglage et la droite de maintien correspondant au tracé de la valeur moyenne des deux droites de régression et en ce que le calculateur (22) détermine la grandeur de commande ($I_s$) de l'organe de réglage (11) nécessaire pour une grandeur de réglage (y) appliquée à la sortie de l'organe de régulation (18) en partant de l'une des trois droites à savoir la droite de maintien lorsque l'amplitude de la déviation de régulation $|x_w|$ est inférieure à une grandeur prédéterminée ($|x_w|_{vor}$), et l'une des deux droites de régression lorsque l'amplitude de la déviation de régulation ($|x_w|$) est supérieure à la grandeur prédéterminée ($|x_w|_{vor}$), le choix de la droite de régression étant fait en fonction du signe algébrique de la variation de grandeur de réglage

**2.** Installation de régulation selon la revendication 1, caractérisée en ce que l'organe de réglage (11) est conçu pour nécessiter une grandeur de commande important ($I_s$) pour commander une petite grandeur de régulation (x) et inversement, l'une des droites de régression constituant la droite d'évacuation étant rapprochée de la branche d'hystérésis croissante et l'autre droite de régression appelée droite de remplissage étant associée à la branche d'hystérésis décroissante de la caractéristique de réglage, le choix des droites de régression pour déterminer une grandeur de commande est tel que l'on choisit la droite d'évacuation lorsque la grandeur de réglage (y) diminue et la droite de remplissage lorsque la grandeur de réglage (y) augmente.

**3.** Installation de régulation selon la revendication 1 ou 2, caractérisée en ce que le calculateur (22) comporte au moins une zone de mémoire (231, 241, 251) contenant des paires de paramètres ($a_F$, $b_F$ ; $a_A$, $b_A$ ; $a_H$, $b_H$) des droites de régression et de la droite de maintien et le calculateur (22) calcule la grandeur de commande ($I_s$) suivant une équation de droite à l'aide des paramètres ($a_F$, $b_F$ ; $a_A$, $b_A$ ; $a_H$, $B_H$) inscrits en mémoire pour chaque grandeur de réglage (y) qui reçoit.

**4.** Installation de régulation selon la revendication 3, caractérisée en ce que le calculateur (22) comporte un dispositif (26) pour recevoir et enregistrer automatiquement des paires de paramètres ($a_F$, $b_F$ ; $a_A$, $b_A$ ; $a_H$, $b_H$) des droites de régression et de la droite de maintien.

**5.** Installation de régulation selon l'une des revendications 1 à 4, caractérisée en ce que l'organe de régulation (18) est précédé d'un circuit de soustraction (19) qui forme la déviation de régulation ($X_w$), ce dernier recevant d'une part le signal de sortie du convertisseur de mesure (17) et d'autre part le signal de sortie du capteur de valeur de consigne (16) par l'intermédiaie d'un filtre passe-bas (21).

6. Installation de régulation selon l'une des revendications 1 à 5, caractérisée par un dispositif sélecteur (27) qui libère pour le calcul l'une des paires de paramètres inscrites en mémoire ($a_f$, $b_f$ ; $a_A$, $b_A$ ; $a_H$, $b_H$) en fonction de l'amplitude de la déviation de régulation ($|x_w|$) et de la croissance ou décroissance de la grandeur de réglage (y).

7. Installation de régulation selon la revendication 6, caracterisée en ce que le dispositif sélecteur (27) libère, pour le calcul, la paire de paramètres ($a_H$, $b_H$) correspondant à la droite de maintien, lorsque l'amplitude de la déviation de régulation ($|X_w|$) est inférieure a la grandeur prédéterminée ($|X_w|$ vor) et pour une amplitude de la déviation de régulation ($|x_w|$) supérieure a la valeur prédéterminée ($|X_w|)$vor), elle libère la paire de paramètres ($a_F$, $b_F$) correspondant à la droite de remplissage et si la grandeur de réglage instantanée ($Y_k$) est supérieure à la grandeur de réglage instantanée ($Y_{k-1}$) de l'instant précédent, elle libère la paire de paramètres ($a_A$, $b_A$) correspondant à la droite d'évacuation si la grandeur de réglage ($Y_k$) instantanée est inférieure à la grandeur de réglage ($Y_{k-1}$) de l'instant précédent.

8. Installation de régulation selon la revendication 6 ou 7, caractérisée en ce que le calculateur (22) est suivi d'un convertisseur numérique/analogique (35).

9. Installation de régulation selon l'une des revendications 1 à 8, caractérisée en ce qu'elle est associée à une installation de freinage de véhicule automobile, utilisant un fluide sous pression de préférence une installation pneumatique et dans laquelle la pression de frein (p) constitue la grandeur de régulation (x).

10. Installation de régulation selon la revendication 9, caractérisée en ce que la grandeur de commande de l'organe de réglage (11) est une intensité de commande ($I_s$).

11. Installation de régulation selon la revendication 10, caractérisée par un régulateur d'intensité (15) prévu entre le convertisseur numérique-analogique (35) et l'organe de réglage (11).

12. Installation de régulation selon l'une des revendications 9 à 11, caractérisée en ce que l'organe de réglage (11) comporte une électro-vanne proportionnelle (13) et une vanne relais (14) à commande par pression, ces deux vannes recevant en entrée la pression du système ($P_{sys}$) de l'installation de frein et en ce que chaque fois en sortie l'électrovanne proportionnelle (13) est reliée à l'entrée de commande de la vanne relais (14) et cette dernière est reliée à une conduite de frein aboutissant au moins un cylindre de frein de roue (12) de l'installation de frein.

9

Fig. 1

Fig. 2

EP 0 233 360 B1

Fig. 3

Fig. 4